# EUROPEAN PATENT APPLICATION

(11) **EP 2 034 394 A1**
(43) Date of publication of application: **11.03.2009**
(21) Application number: 08163587.2
(22) Date of filing: 03.09.2008
(51) Int. Cl.: G06F 3/042, G06F 3/033

(54) **Mouse pointer function execution apparatus and method in portable terminal equipped with camera**

(30) Priority: 06.09.2007 KR 20070090505
(71) Applicant: Samsung Electronics Co., Ltd., Suwon-si, Gyeonggi-Do (KR)
(72) Inventor: Kang, Hwa-Yong, Suwon-si Gyeonggi-do (KR); Yoon, Young-Kwon, Suwon-si, Gyeonggi-do (KR); Lee, Jun-Young, Suwon-si, Gyeonggi-do (KR); Kang, Sung-Wook, Suwon-si, Gyeonggi-do (KR)
(74) Representative: Grünecker, Kinkeldey, Stockmair & Schwanhäusser Anwaltssozietät

(57) **Abstract**

Disclosed is an apparatus and a method for executing a mouse pointer function in a portable terminal equipped with a camera. The method includes: capturing an external image signal by a camera module; sampling the external image signal and converting a sampled image signal into image data; mapping a group of pixels of the image data generated by the sampling to a group of pixels of an image sensor for each unit pixel on a one-to-one basis; detecting coordinate values of all image data including a point light source in the group of the mapped pixels; determining if a point light source is actually included in all of the image data including the point light source; and activating the detected coordinate values of all of the image data including the point light source and displaying the activated coordinate values on a screen.

## Description

### BACKGROUND OF THE INVENTION

### 1. Field of the Invention

The present invention relates to a portable device, and more particularly to an apparatus and a method of executing a mouse pointer function in a portable terminal equipped with a camera.

### 2. Description of the Related Art

A portable terminal typically provides a communication function in which a user can talk over the telephone or exchange data with the other party while the user is moving, such as a cellular phone, a Personal Digital Assistant (PDA), a Personal Communication Services phone (PCS), an International Mobile Telecommunication-2000 (IMT-2000) terminal, a Global System for Mobile communication (GSM) terminal, and the like.

The portable terminal is now commonly used anywhere in the world by people of all ages and sexes, and getting smaller, slimmer, and lighter. Current progress is heading for a multimedia device capable of executing even more various functions. A future portable terminal will change in its form in such a manner as to be adapted to various multimedia environments or an internet environment.

Now, a portable mobile communication terminal transmits high-speed data as well as a voice communication. Data which can be processed by the portable terminal may include packet data and image data. Also, by equipping the portable terminal with a camera or a television receiver (i.e. a TV set), etc., a function of displaying a moving-picture signal is being implemented therein. Therefore, the portable terminal equipped with the camera as described above can photograph a screen image and display the photographed screen image as a moving-picture or a still picture. Further, the portable terminal can transmit the photographed screen image.

While performing video transmission/reception along with audio transmission/reception, a user's portable terminal equipped with the video communication function as described above transmits video data of the user, receives video data of the other party, and displays the received video data on a screen thereof at the same time as the transmitted video data is displayed on a screen of a portable terminal of the other party, so that audio and video communication with the other party can be performed through each portable terminal.

However, in order to explain or indicate a part within a moving-picture or a still picture transmitted to the other party during moving-picture communication, a user cannot explain the part verbally or physically. Currently, the user must explain the part while the user can't view a screen image. Moreover, when the part intended to be explained in the moving-picture or still picture is intricate, accurate communication becomes difficult. For accurate communication, time necessary to explain the part by word of mouth or action of the user becomes longer.

Therefore, there has been an urgent need for an input method of quickly and accurately indicating a particular situation transmitted as a moving-picture or a particular part transmitted as a still picture without user's additional explanation before the transmission

### SUMMARY OF THE INVENTION

Accordingly, the present invention has been made to solve the above-stated problems occurring in the prior art by providing an apparatus and a method capable of definitely delivering an explanation of a screen image transmitted during a moving-picture communication mode without changing a direction of a user's gaze in order to more effectively deliver it. In accordance with an aspect of the present invention, a method for executing a mouse pointer function by a portable terminal equipped with a camera includes: capturing an external image signal by a camera module; sampling the external image signal and converting a sampled image signal into image data; mapping a group of pixels of the image data generated by the sampling to a group of pixels of an image sensor for each unit pixel on a one-to-one basis; detecting coordinate values of all image data including a point light source in the group of the mapped pixels; determining if a point light source is actually included in all of the image data including the point light source; and activating the detected coordinate values of all of the image data including the point light source and displaying the activated coordinate values on a screen.

In accordance with another aspect of the present invention, an apparatus for executing a mouse pointer function in a portable terminal equipped with a camera includes: a camera module for receiving as input an external image signal; and an input device for delivering a signal source recognizable by the camera module to the camera module.

### BRIEF DESCRIPTION OF THE DRAWINGS

The above and other exemplary features, aspects, and advantages of the present invention will be more apparent from the following detailed description taken in conjunction with the accompanying drawings, in which:
FIG. 1 illustrates data input using a point light source according to an embodiment of the present invention;
FIG 2 is a block diagram illustrating a configuration in an image sensor of a camera module to which the present invention is applied;
FIG 3 illustrates the mapping of a point light source signal configured by a single pixel or multiple pixels to a group of pixels of the image sensor in a moving-picture mode according to an embodiment of the present invention;
FIG 4 illustrates the mapping of a point light source signal configured by a single pixel or multiple pixels to a group of pixels of the image sensor in a still picture mode according to an embodiment of the present invention;
FIG 5 is a flowchart illustrating a process for detecting a point light source signal emitted by an input device in a moving-picture according to an embodiment of the present invention; and
FIG 6 is illustrates the mapping of multiple pixels of an activated point light source to a group of pixels of the image sensor according to an embodiment of the present invention.

### DETAILED DESCRIPTION OF THE INVENTION

Hereinafter, exemplary embodiments of the present invention will be described in detail with reference to the accompanying drawings. Particulars found in the following description of the present invention, such as specific configuration elements, etc., are provided only to help comprehensive understanding of the present invention, and it is obvious to those skilled in the art that various changes in form and details may be made in the particulars without departing from the spirit and scope of the invention. For the purposes of clarity and simplicity, a detailed description of known functions and configurations incorporated herein will be omitted as it may make the subject matter of the present invention rather unclear.

In order to explain or indicate a specific portion within a moving-picture or a still picture transmitted to the other party during the moving-picture communication mode, a user is unable to explain verbally or physically to the recipient. Moreover, when the portion intended to be explained in the moving-picture or still picture is intricate, accurate communication becomes difficult. To address this, the present invention proposes a new method in which a user can accurately input desired information by using an input device, which is easily controllable by manipulation of fingers and a camera module mounted in a portable terminal. Hereinafter, a detailed description of the present invention will be made referring to a block diagram illustrating the configuration of an apparatus and a flowchart illustrating the method according to the present invention.

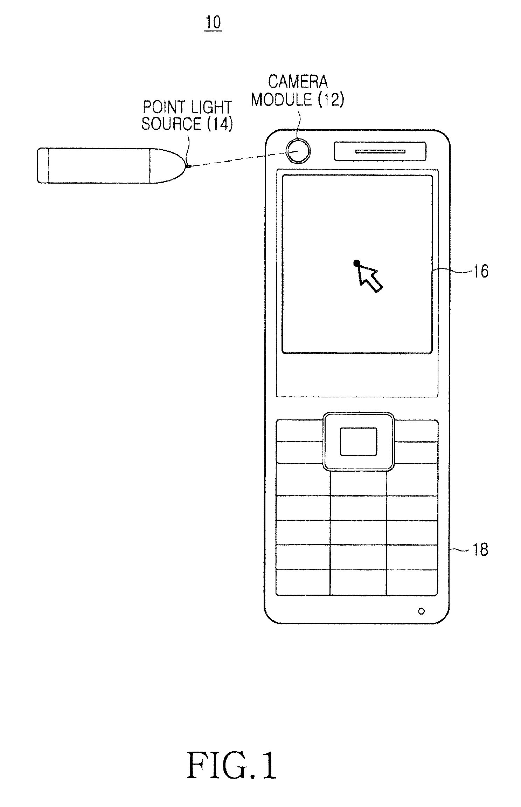

FIG. 1 illustrates data input using a point light source according to an embodiment of the present invention.

Referring to FIG 1, the mouse pointer function execution apparatus 10 according to the present invention includes a camera module 12, an input device 14 , and a screen 16. Herein, the camera module 12 is mounted in a portable terminal 18. The input device 14 can be easily switched on or off by a user. The screen 16 displays the movement of the input device 14. The output of the pen-shaped input device 14 according to the present invention uses a point light source, such as a Light-Emitting Diode (LED) and infrared rays, and the like. The point light source is provided at a front end portion of the input device in a projected shape in order to prevent the point light source from being obstructed while the point light source moves toward the camera module 12. The point light source output from the input device 14 is sensed by an image sensor 20(not shown) within the camera module 12 mounted in the portable terminal, and accordingly, information on the point light source is displayed on the screen.

Herein, the image sensor within the camera module 12 mounted in the portable terminal 18 has the characteristics of efficiently absorbing visible light or infrared rays. The configuration of the image sensor will be described in detail as follows.

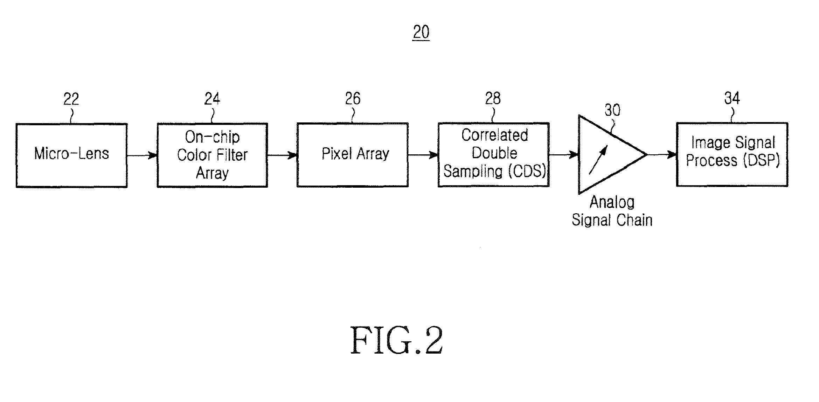

FIG 2 is a block diagram illustrating a configuration in the image sensor 20 of the camera module to which the present invention is applied.

Referring to FIG 2, an external image is received as input to a micro-lens group 22, and is then divided into unit pixels. The external image in a pixel form passes through a color filter group 24, and is then transmitted to a filter group for imaging an external image. The filter group 24 forms a unit pixel by using a photo diode, and formed unit pixels are arranged in X and Y coordinate directions so as to generate a desired image. By sampling an image signal corresponding to a relevant position of each unit pixel in a group of pixels, image data in a mosaic form is generated in the pixel array 26. The generated image data in the mosaic form is converted into an electrical signal, the electrical signal passes through a Correlated Double Sampling (CDS) unit 28 and an Analog Signal Chain (ASC) unit 30, and an analog image signal is then output from the ASC unit 30. The analog image signal is converted into a digital signal by Analog-to-Digital Converter (ADC) and the digital signal is then delivered to an image signal processing unit 34.

The image data in the mosaic form generated by sampling the external image signal by the image sensor as illustrated in FIG 2 can be expressed in a coordinate form with X and Y axes respectively corresponding to horizontal and vertical axes. X and Y coordinates as described above can be mapped to coordinates of unit pixels within the filter groupof the image sensor on a one-to-one basis.

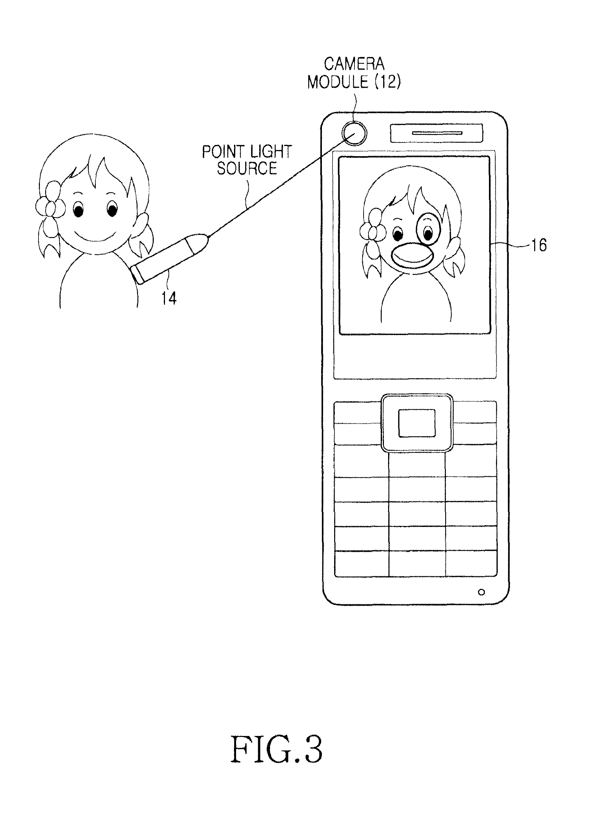

FIG 3 illustrates the mapping of a point light source signal configured by a single pixel or multiple pixels to a group of pixels of the image sensor 20 in a moving-picture mode according to an embodiment of the present invention. As shown, when a strong point light source signal is received as input along with a captured image light signal, by searching for X and Y coordinates in the group of pixels of the image sensor, a position value of the received point light source signal can be detected. Note that the light output generated by the input device 14 is stronger than the external image being captured by the camera module 12 Then, the detected position value of the received point light source signal can be displayed on the screen 16 through the image signal processing unit.

Referring to FIG 3, when a particular region in the screen that the user must indicate or explain is displayed during a moving-picture communication mode, the input device 14 emits a point light source within a viewing angle of the camera module 12. Accordingly, the user can indicate the particular region by using the emitted point light source as if the user indicates it by using a pointer. At this time, the image sensor of the camera module detects, with X and Y coordinates as reference, position information of a unit pixel from which a brightness above a threshold value preset to a particular value is detected, and the detected position information of the unit pixel is then output to the screen.

Herein, a signal output to the screen can be implemented as an indication icon, etc., and according to a user's selection, multiple signals may continue to remain on the screen, or may be erased after once displaying them.

In an alternate embodiment, depending on each device type of portable terminals, an additional camera module may be mounted in a portable terminal. In this case, when a particular region in a screen image the user must indicate or explain is displayed on a screen, by changing the selection of a camera module as a user desires, the user can indicate the particular region by using a point light source emitted from an input device as if the user indicates it by using a pointer.

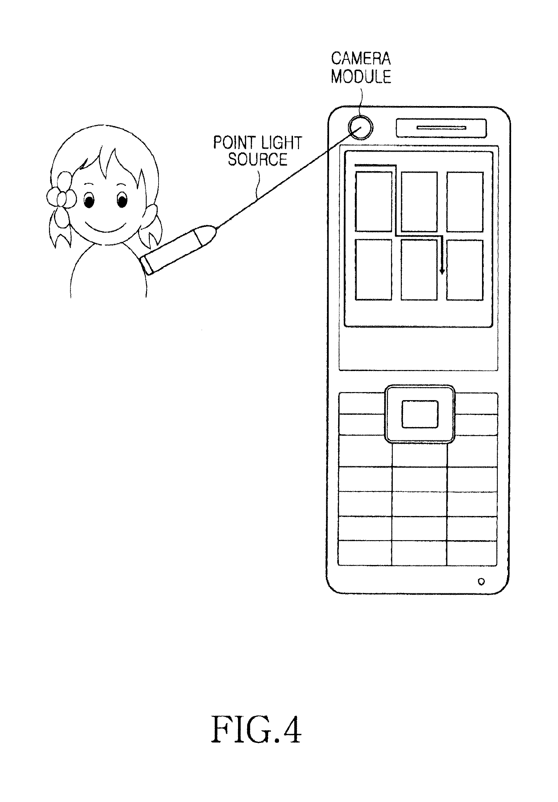

FIG 4 illustrates the mapping of a point light source signal configured by a single pixel or multiple pixels to a group of pixels of the image sensor in a still picture mode according to another embodiment of the present invention. Similarly, in the case as described above referring to FIG 3, when a strong point light source signal is received as input along with a captured image light signal, by searching a group of pixels of the image sensor for X and Y coordinates, a position value of the received point light source signal can be detected. Then, the detected position value of the received point light source signal can be displayed on the screen through the image signal processing unit.

In FIG 4, when it is necessary to specifically explain a particular screen image such as a map and a photograph during a moving-picture communication, while continuously transmitting the particular screen image intended to be explained, contents intended to be indicated are included in the particular screen image, and then the particular screen image including the contents intended to be indicated can be transmitted. The contents intended to be indicated are generated by the point light source emitted from the input device and the image sensor of the camera module as described above. As illustrated in FIG. 4, when one or more unit pixels overlapping the particular screen image are displayed on the screen, the one or more unit pixels can be displayed on the screen as one line.

A description of a process for detecting a point light source according to the embodiment of the present invention will be made as follows.

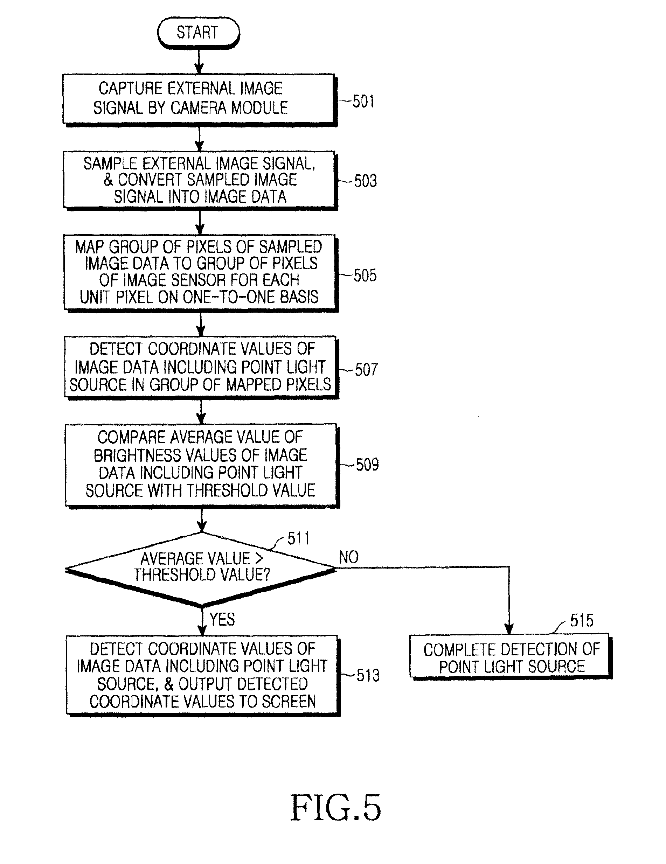

FIG 5 is a flowchart illustrating the process for detecting the point light source signal emitted by the input device in a moving-picture according to the embodiment of the present invention. Namely, FIG 5 illustrates such a process in which a point light source emitted by the input device is output to the screen using the image sensor.

Referring to FIG 5, first, a point light source signal is received as input by the camera module in step 501. In step 503, the image sensor of the camera module samples a received external image signal, and converts the sampled image signal into image data. In step 505, a group of pixels of the converted image data including a combination of unit pixels is mapped to a group of pixels of the image sensor for each unit pixel in a one-to-one basis, then the group of pixels of the image data regarding the external image signal is output to the screen of the portable terminal. Since the group of pixels of the image data regarding the external image signal is mapped to the group of pixels of the image sensor in a one-to-one basis, it is possible to detect a position value of a particular pixel.

At this time, a strong signal source corresponding to a point light source may exist in the mapped image data. In step 507, in order to determine the existence of the strong signal source, coordinate values of a pixel of the strong signal source corresponding to the point light source are detected. In step 509, an average value of brightness values of the image data including the point light source is calculated, and the calculated average value is then compared with a threshold value. Due to the characteristics of a moving-picture, coordinate values are detected not in one frame, but in multiple frames, thus an average value of brightness values of image data corresponding to the detected multiple coordinate values is calculated.

If it is determined in step 511 that an average value of the brightness values of the image data including the point light source is smaller than the threshold value, the process proceeds to step 515 to determine that there is no output of the input device, and completes the detection of the point light source. On the contrary, if it is determined in step 511 that an average value of the brightness values of the image data including the point light source is larger than the threshold value, the process proceeds to step 513 to detect coordinate values of the image data including the point light source, and displays the detected coordinate values on the screen.

Here, the process may display changing position information (i.e. changing coordinate values) of the image data including the point light source which are accumulatively detected, or may display only currently detected position information on the screen.

The threshold value refers to a reference value necessary to determine a brightness or an intensity of visible light or infrared rays emitted by the input device, and thus used to discriminate among intensity values (or brightness values) different from each other depending on a distance of a detector from the point light source.

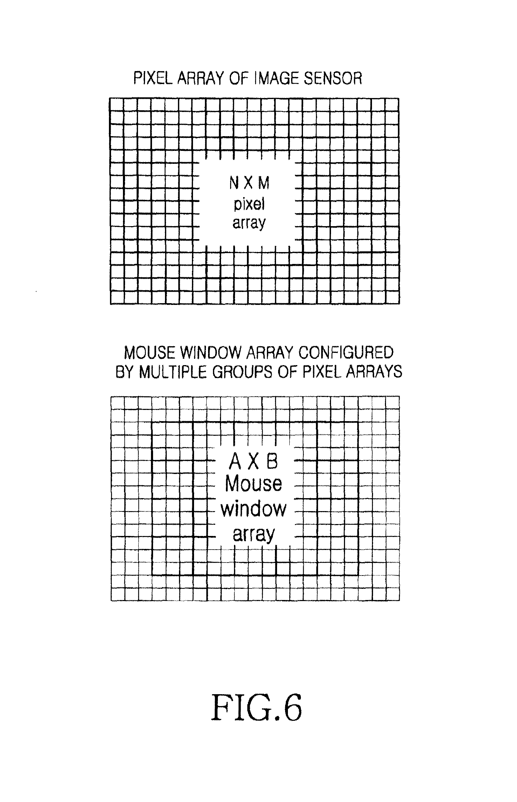

FIG. 6 is illustrates the mapping of multiple pixels of an activated point light source to a group of pixels of the image sensor according to the embodiment of the present invention.

In FIG. 6, the group of pixels of the image sensor of the camera module is illustrated, and a group of pixels of image data including a combination of unit pixels is mapped to the group of pixels of the image sensor for each unit pixel on a one-to-one basis. Accordingly, a group of pixels of the image data generated by sampling the external image signal can be output to the screen of the portable terminal. When multiple unit pixels of the point light source are detected in the group of pixels of the image data regarding the external image signal, the detected multiple unit pixels of the point light source can be mapped to the group of pixels of the image sensor (refer to the second view of FIG 6). All rays of visible light or infrared rays emitted by the input device are included in the group of pixels of the image data regarding the external image signal configured by the multiple unit pixels.

Visible light or infrared rays recognizable by the image sensor of the camera module mounted in the portable terminal can be used as a point light source (i.e. a signal source). Note that all light sources which can be configured as a small but fully bright point light source recognizable by the image sensor, can be used as a signal source.

The input device is configured for convenient use as a small mouse having such a shape that a user can switch the input device between modes thereof while holding it with the user's fingers, or as a fingernail mouse which can be fixed onto a fingertip of the user. Also, the input device may be equipped with a light source which can be switched between on and off modes thereof by the user so that the user can send a desired signal. Further, , when a viewing angle of the camera module mounted in the portable terminal increases, the user so fully moves the input device that the portable terminal can relatively sophisticatedly display an output value on the screen thereof.

As described above, the configuration and the operation of the apparatus and the method for executing the mouse pointer function according to one embodiment of the present invention can be implemented in the portable terminal equipped with the camera. According to the present invention as described above, an explanation of a screen image transmitted during moving-picture communication can be accurately and clearly delivered to the other party without changing a direction of a user's gaze.

Meanwhile, while the invention has been shown and described with reference to certain exemplary embodiments thereof, it will be understood by those skilled in the art that various changes in form and details may be made therein without departing from the spirit and scope of the invention. Therefore, the spirit and scope of the present invention must be defined not by described embodiments thereof but by the appended claims and equivalents of the appended claims.

## Claims

1. A method for executing a mouse pointer function by a portable terminal having a camera module and a screen, the method comprising:
sampling an external image signal and converting a sampled image signal into image data comprised of a plurality of frames;
mapping a group of pixels of the image data generated by the sampling to a group of pixels of an image sensor of the camera module for each unit pixel on a one-to-one basis;
detecting coordinate values of the image data in the group of the mapped pixels;
determining if a point light source is included in the image data by comparing an average brightness value of the image data including the point light source to a predetermined threshold value; and
if the average brightness value is greater than the predetermined threshold value, displaying the detected coordinate values of the image data including the point light source on the screen.

2. The method as claimed in claim 1, wherein the converting the sampled image signal into the image data is performed by the image sensor of the camera module.

3. The method as claimed in claim 1 or claim 2, wherein, in the mapping the group of pixels of the image data generated by the sampling, coordinates are generated with X and Y axes as reference in the group of pixels of the image sensor, and the generated coordinates are mapped to the screen.

4. An apparatus for executing a mouse pointer function in a portable terminal equipped with a camera, comprising:
a camera module for sampling an input an external image signal, converting the sampled image signal into image data, detecting coordinates values of the image data to display the detected coordinate values of the image data; and
an input device for delivering a point light signal recognizable by the camera module, wherein an average brightness value of the image data including the point light source is compared to a predetermined threshold value to determine whether to display the detected coordinate values of the image data including the point light source on the screen.

5. The apparatus as claimed in claim 4, wherein the camera module receives as the input the external image signal through an image sensor thereof.

6. The apparatus as claimed in claim 4 or claim 5, wherein the input device uses a signal source detectable by an image sensor as a light source, wherein the signal source comprises a visible light or an infrared ray.

7. The apparatus as claimed in any of claim 4 to 6, wherein the input device emits a signal source as a point light source to an image sensor of the camera module through a switch, wherein the signal source comprises a visible light or an infrared ray.
